# EUROPÄISCHE PATENTSCHRIFT

(11) **EP 3 005 543 B1**
(45) Veröffentlichungstag und Bekanntmachung des Hinweises auf die Patenterteilung: **25.03.2020**
(21) Anmeldenummer: 13741988.3
(22) Anmeldetag: 15.07.2013
(51) Int. Cl.: H02M 3/156, H02M 7/483, H02M 7/493, H02J 3/36

(54) **MODULARER MULTILEVEL DC/DC WANDLER FÜR HVDC ANWENDUNGEN**
MODULAR MULTILEVEL DC/DC CONVERTER FOR HVDC APPLICATIONS
CONVERTISSEUR CC/CC MODULAIR MULTI-NIVEAUX POUR LES APPLICATIONS HAUTE TENSION

(43) Veröffentlichungstag der Anmeldung: 13.04.2016
(73) Patentinhaber: Siemens Aktiengesellschaft, 80333 München (DE)
(72) Erfinder: BAKRAN, Mark-Matthias, 91052 Erlangen (DE); ERGIN, Dominik, 91083 Baiersdorf (DE); KNAAK, Hans-Joachim, 91054 Erlangen (DE); SCHÖN, Andre, 91096 Möhrendorf (DE)
(86) Internationale Anmeldenummer: PCT/EP2013/064928
(87) Internationale Veröffentlichungsnummer: WO 2015/007302

(56) Entgegenhaltungen:
- WO-A1-2013/071962
- WO-A1-2013/149633
- WO-A1-2013/185825
- US-A- 3 448 286
- US-A- 3 942 089
- US-A1- 2010 156 189
- KNUDSEN L ET AL: "DESCRIPTION AND PROSPECTIVE APPLICATIONS OF NEW MULTI-TERMINAL HVDC SYSTEM CONCEPTS", CIGRE CONF. INTERNATIONALE DES GRANDS RESEAUX ELECTRIQUES, XX, XX, 26. August 1990 (1990-08-26), Seiten 1-11, XP000770178,
- MICHAEL P BAHRMAN ET AL: "The ABCs of HVDC transmission technologies", IEEE POWER AND ENERGY MAGAZINE, IEEE., PISCATAWAY, NJ, US, Bd. 4, Nr. 2, 1. März 2007 (2007-03-01), Seiten 32-44, XP011174684, ISSN: 1540-7977

## Beschreibung

Die Erfindung betrifft einen Gleichspannungswandler zum Verbinden von unterschiedliche Spannungen aufweisenden Hochspannungsgleichstromnetzen.

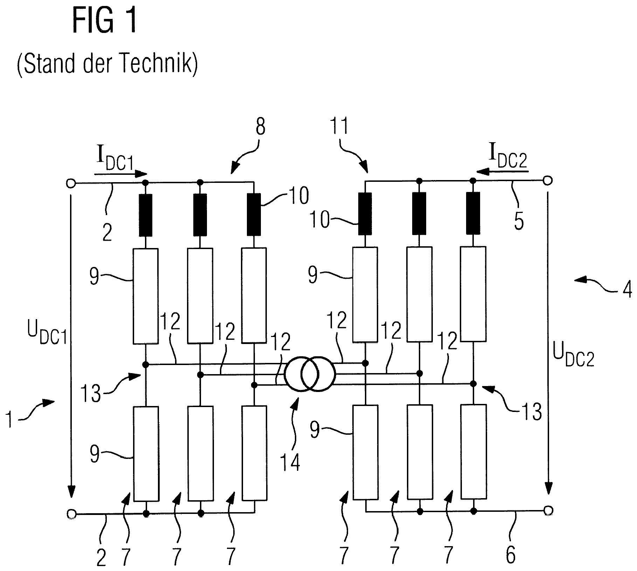

Ein aus dem Stand der Technik bekannter Gleichspannungswandler zum Verbinden von Hochspannungsgleichstromnetzen, die auf unterschiedlichen Spannungsniveaus liegen, ist beispielhaft in der Figur 1 verdeutlicht. Der dort gezeigte Gleichspannungswandler weist zum Anschluss eines ersten Hochspannungsgleichstromnetzes einen ersten Gleichspannungsanschluss 1 auf, der eine positive Gleichspannungsklemme 2 sowie eine negative Gleichspannungsklemme 3 ausbildet. Zum Anschluss eines zweiten Hochspannungsgleichstromnetzes mit einer geringeren Nenngleichspannung ist ein zweiter Gleichspannungsanschluss 4 vorgesehen, der wieder eine positive Gleichspannungsklemme 5 sowie eine negative Gleichspannungsklemme 6 aufweist. Zwischen der positiven 2 und der negativen Gleichspannungsklemme 3 des ersten Gleichspannungsanschlusses 1 erstrecken sich drei Phasenmodule 7 eines ersten Teilumrichters 8. Dabei besteht ein Phasenmodul 7 aus zwei in Reihe miteinander geschalteten Umrichterarmen 9 sowie einer Induktivität 10 in Gestalt von Spulen. Ferner ist ein zweiter Teilumrichter 11 vorgesehen, der ebenfalls drei Phasenmodule 7 aufweist, die jeweils aus zwei in Reihe geschalteten Umrichterarmen 9 und einer Induktivität 10 zusammengesetzt sind. Jedes Phasenmodul 7 bildet zwei Gleichspannungsanschlüsse aus, die einmal die positiven Anschlussklemme 5 sowie die negative Anschlussklemme 6 des zweiten Gleichspannungsanschlusses 4 bilden. Der Potentialpunkt zwischen den Umrichterarmen 9 bildet eine Wechselspannungsphase eines Wechselspannungsanschlusses 12 des jeweiligen Umrichters 8 bzw. 11 aus. Die beiden Wechselspannungsanschlüsse 12 sind über einen dreiphasigen Transformator 14 miteinander verbunden. Dabei können die Wicklungen des besagten Transformators 14 auf beliebige Art und Weise, also beispielsweise in Dreiecks- oder Sternschaltung miteinander verbunden sein.

Gemäß dieser vorbekannten Vorrichtung wird die Gleichspannung des ersten Gleichspannungsnetzes zunächst über den ersten Teilumrichter 8 in eine Wechselspannung überführt, über den Transformator 14 auf die jeweils benötigte Spannungsebene transformiert und anschließend wieder durch den Teilumrichter 11 in die gewünschte Gleichspannung umgewandelt.

Gleichspannungswandler für kleine bis mittlere Energien sind ebenfalls hinreichend bekannt. In diesem Zusammenhang sind Hoch- oder Tiefsetzsteller zu nennen, die mit Spulen und Kondensatoren ausgerüstet sind, wobei Leistungshalbleiterschalter für eine kurzzeitige Unterbrechung eines Stromflusses sorgen. Die Leistungshalbleiter der bekannten Hoch- oder Tiefsetzsteller würden jedoch im Hochspannungsbereich so stark belastet, dass bereits nach kurzer Zeit irreparable Schäden auftreten könnten.

Aus der Patentschrift US 3,942,089 A ist ein Hochspannungs-Gleichstrom-Übertragungssystem bekannt, bei dem elektrisch in Reihe geschaltete Wechselrichter und Gleichrichter über jeweils einen Transformator mit einer Sammelschiene gekoppelt sind.

Aus der Schrift von Knudsen et al "Description and Prospective Applications of New Multi-Terminal HVDC System Concepts"; CIGRE Conf. Internationale des Grands Resseaux Electrique; Seiten 1-11; XP000770178 / 26.08.1990 ist ein Multiterminal HVDC-System mit drei Terminals und zwei Spannungsebenen bekannt. Dieses System weist zwei Umrichter auf, die über jeweils einen Transformator mit einem Wechselspannungsnetz verbunden sind.

Aus der Patentschrift US 3,448,286 A ist eine Umrichterstation bekannt, bei der eine Reihe von Umrichtern in Reihenschaltung zwischen zwei Gleichspannungsanschlüssen angeordnet sind. Die Umrichter sind wechselspannungsseitig jeweils mittels eines Transformators elektrisch parallelgeschaltet und mit einem Wechselspannungsnetz verbunden.

Aus der internationalen Offenlegungsschrift WO 2013/071962 A1 ist ein Umrichter bekannt, dessen Umrichterarme jeweils eine Vielzahl von Umrichterzellen aufweisen. Die Umrichterzellen können beispielsweise als eine Halbbrückenschaltung oder eine Vollbrückenschaltung ausgeführt sein.

Aus der noch nicht veröffentlichten internationalen Patentanmeldung PCT/EP2012/070203 ist eine Vorrichtung bekannt, die beispielhaft in Figur 2 beschrieben ist. Der dort gezeigte Gleichspannungswandler 15 verfügt über einen ersten Gleichspannungsanschluss 1 mit einer positiven 2 und einer negativen Gleichspannungsklemme 3. Ferner ist ein zweiter Gleichspannungsanschluss 4 mit einer positiven Gleichspannungsklemme 5 sowie einer negativen Gleichspannungsklemme 6 vorgesehen. Die Gleichspannungsklemme 6 liegt auf dem gleichen Potential wie die Gleichspannungsklemme 3 des ersten Gleichspannungsanschlusses 1. Der gezeigte Gleichspannungswandler 15 umfasst ferner einen ersten Teilumrichter 8 sowie einen zweiten Teilumrichter 11, die miteinander in Reihe geschaltet sind und eine Umrichterreihenschaltung 16 ausbilden, wobei der erste Teilumrichter 8 gleichspannungsseitig über Induktivitäten 10 mit der positiven Gleichspannungsklemme 2 des ersten Gleichspannungsanschlusses 1 und mit der positiven Gleichspannungsklemme 5 des zweiten Gleichspannungsanschluss 4 verbunden ist. Der zweite Teilumrichter 11 ist gleichspannungsseitig ebenfalls über Induktivitäten 10 mit der positiven Gleichspannungsklemme 5 des zweiten Gleichspannungsanschluss 4 und mit der negativen Gleichspannungsklemme 3 des ersten Gleichspannungsanschlusses 1 verbunden. Die Umrichterreihenschaltung 16 erstreckt sich zwischen den Gleichspannungsklemmen 2, 3 des ersten Gleichspannungsanschlusses 1. Zwischen den Gleichspannungsklemmen 5, 6 des zweiten Gleichspannungsanschlusses 4 erstreckt sich der zweite Teilumrichter 11 mit seinen Phasenmodulen 7.

Der erste Gleichspannungsanschluss 1 dient zum Anschluss eines ersten Gleichspannungsnetzes mit der Nenngleichspannung U_{DC1}. Der zweite Gleichspannungsanschluss dient zum Anschluss eines zweiten Gleichspannungsnetzes mit der Nennspannung U_{DC2}. Die Nenngleichspannung U_{DC1} des ersten Gleichspannungsnetzes ist hier dreimal so hoch wie die Nenngleichspannung des zweiten Gleichspannungsnetzes U_{DC2} (*U*_{*DC*1} = 3^{∗}*U*_{*DC*2})*.* Das Übersetzungsverhältnis ü des Gleichspannungswandlers 15 ist somit gleich 3. Während des Betriebs des Gleichspannungswandlers 15 fällt somit die Spannung U_{DC2} des zweiten Gleichspannungsnetzes an dem zweiten Teilumrichter 11 ab. Die positive Gleichspannungsklemme 5 des zweiten Gleichspannungsanschlusses 4 liegt auf dem Gleichspannungspotentialpunkt zwischen dem ersten Teilumrichter 8 und dem zweiten Teilumrichter 11.

Die Topologie des ersten Teilumrichters 8 kann der Topologie des zweiten Teilumrichters 11 im Wesentlichen entsprechen. Um jedoch Kurzschlüsse im ersten Gleichspannungsnetz blockieren und gleichzeitig möglichst verlustarm arbeiten zu können, kann der Aufbau der Teilumrichter unterschiedlich sein.

Der Wechselspannungsanschluss 12 des ersten Teilumrichters 8 ist mit einer Primärwicklung 18 eines dreiphasigen Transformators 14 als Leistungsaustauschmittel galvanisch verbunden. Der Wechselspannungsanschluss 12 des zweiten Teilumrichters 11 ist mit der Sekundärwicklung des Transformators verbunden. Durch die induktive Kopplung der Wicklungen des Transformators ist ein Leistungsaustausch zwischen dem ersten Teilumrichter 8 und dem zweiten Teilumrichter 11 ermöglicht. Hierbei werden die Teilumrichter 8, 11 so angesteuert, dass sich ein Leistungsfluss von dem am ersten Teilumrichter 8 zum zweiten Teilumrichter 11 einstellt, der die Leistung dann in das am zweiten Gleichspannungsanschluss 4 anliegende Gleichspannungsnetz einleitet.

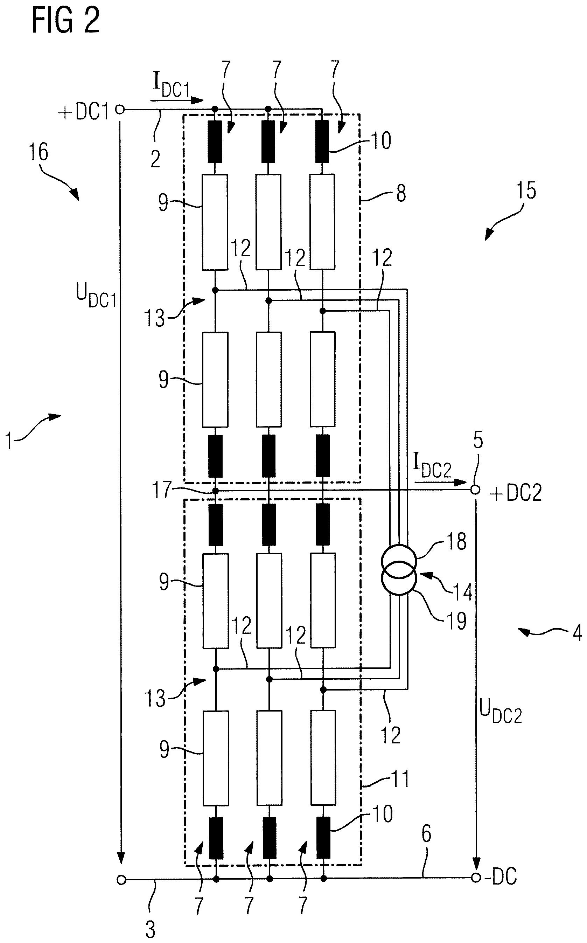

Ein solcher in Figur 2 gezeigter Gleichspannungsumwandler weist gegenüber dem in Figur 1 gezeigten Gleichspannungsumwandler den Vorteil auf, dass dieser wesentlich kostengünstiger ist. Allerdings eignet sich der in Figur 2 gezeigte Gleichspannungsumwandler nicht dazu, Hochspannungsgleichstromnetze miteinander zu verbinden, die zueinander unterschiedliche Symmetrien aufweisen, oder wenn eine Potenzialtrennung gewünscht ist. Solche unterschiedlichen Symmetrien treffen jedoch aufeinander, wenn beispielsweise ein so genanntes symmetrisches Hochspannungsgleichstromnetz mit einem unsymmetrischen bipolaren Hochspannungsgleichstromnetzübertragungsnetz verbunden werden soll.

Aufgabe der Erfindung ist es daher, einen Gleichspannungswandler bereitzustellen, der kostengünstig ist und der gleichzeitig die Verbindung von Hochspannungsgleichstromnetzen ermöglicht, die eine zueinander unterschiedliche Symmetrie aufweisen können.

Die Erfindung löst diese Aufgabe durch einen Gleichspannungswandler gemäß dem Patentanspruch 1. Ein derartiger Gleichspannungswandler weist
- eine aus in Reihe geschalteten Teilumrichtern gebildete Umrichterreihenschaltung auf, die zwischen einer positiven und einer negativen Anschlussklemme eines ersten Gleichspannungsanschlusses angeordnet ist,
- wobei wenigstens zwei Teilumrichter der Umrichterreihenschaltung als Pluspol-Teilumrichter zwischen einer Mittenanschlussklemme und der positiven Anschlussklemme des ersten Gleichspannungsanschlusses in Reihe angeordnet sind und
- die Pluspol-Teilumrichter über Pluspol-Leistungsaustauschmittel miteinander verbunden sind, so dass der Austausch von elektrischer Leistung zwischen den Pluspol-Teilumrichtern ermöglicht ist,
- wobei der Potenzialpunkt zwischen den Pluspol-Teilumrichtern eine positive Anschlussklemme eines zweiten Gleichspannungsanschlusses ausbildet,
- wobei wenigstens zwei Teilumrichter der Umrichterreihenschaltung als Minuspol-Teilumrichter zwischen der Mittenanschlussklemme und der negativen Anschlussklemme des ersten Gleichspannungsanschlusses in Reihe angeordnet sind und
- die Minuspol-Teilumrichter über Minuspol-Leistungsaustauschmittel miteinander verbunden sind, so dass der Austausch von elektrischer Leistung zwischen den Minuspolteilumrichtern ermöglicht ist,
- wobei der Potenzialpunkt zwischen den Minuspol-Teilumrichtern eine negative Anschlussklemme des zweiten Gleichspannungsanschlusses ausbildet, und
- wobei Zusatzleistungsaustauschmittel vorgesehen sind, die so mit den Pluspol-Teilumrichtern und den Minuspol-Teilumrichtern verbunden sind, dass ein Leistungsaustausch zwischen den Pluspol-Teilrichtern und den Minuspol-Teilumrichtern über die Zusatzleistungsaustauschmittel ermöglicht ist.

Erfindungsgemäß ist ein Gleichspannungswandler bereitgestellt, mit dem zwei Hochspannungsgleichstromnetze miteinander verbunden werden können, die sowohl unterschiedliche Nenngleichspannungen als auch unterschiedlicher Symmetrien aufweisen. So ist der erfindungsgemäße Gleichspannungswandler mit zwei Gleichspannungsanschlüssen ausgestattet, die jeweils zwei Anschlussklemmen ausbilden. Zwischen den Anschlussklemmen des ersten Gleichspannungsanschlusses, der für die größere Gleichspannung ausgelegt ist, erstreckt sich eine Umrichterreihenschaltung, die miteinander in Reihe geschaltete Teilumrichter aufweist. Die Teilumrichter lassen sich in Pluspol-Teilumrichter und Minuspol-Teilumrichter unterteilen, wobei die Pluspol-Teilumrichter wiederum in Reihe zu den Minuspol-Teilumrichtern geschaltet sind. Der Potenzialpunkt zwischen den Pluspol-Teilumrichtern und den Minuspol-Teilumrichtern bildet eine Mittenanschlussklemme aus, wobei sich die Pluspol-Teilumrichter zwischen der positiven Anschlussklemme des ersten Gleichspannungsanschlusses und der Mittenanschlussklemme erstreckt. Mit anderen Worten sind die Pluspol-Teilumrichter in Reihe zwischen die Mittenanschlussklemme und die positive Anschlussklemme des ersten Gleichspannungsanschlusses geschaltet. Dabei sind die Pluspol-Teilumrichter über Pluspol-Leistungsaustauschmittel miteinander verbunden, so dass diese miteinander Leistung austauschen können. Ein Potenzialpunkt zwischen gleichspannungsseitig miteinander verbundenen Pluspol-Teilumrichtern bildet eine positive Anschlussklemme des zweiten Gleichspannungsanschlusses aus. Entsprechend sind Minuspol-Teilumrichter vorgesehen, die ebenfalls in Reihe geschaltet sind, wobei diese Reihenschaltung zwischen der Mittenanschlussklemme und der negativen Anschlussklemme des ersten Gleichspannungsanschlusses angeordnet ist. Minuspol-Leistungsaustauschmittel ermöglichen den Austausch von Leistung zwischen den in Reihe miteinander geschalteten Minuspol-Teilumrichtern. Ein Potenzialpunkt zwischen miteinander direkt verbundenen Minuspol-Teilumrichtern bildet eine negative Anschlussklemme des zweiten Gleichspannungsanschlusses aus, an dem im Vergleich zum ersten Gleichspannungsanschluss eine beispielsweise geringere Spannung abfällt. Darüber hinaus sind im Rahmen der Erfindung Zusatzleistungsaustauschmittel vorgesehen, mit deren Hilfe ein Leistungsaustausch zwischen den Pluspol-Teilumrichtern und den Minuspol-Teilumrichtern ermöglicht ist. Auf diese Art und Weise kann ein beliebiger Leistungsfluss unter den Teilumrichtern herbeigeführt werden, so dass auch Gleichspannungsnetze unterschiedlicher Nennspannung und Symmetrie miteinander verbunden werden können.

Zweckmäßigerweise weist jeder Teilumrichter wenigstens zwei parallel geschaltete Phasenmodule auf, die jeweils als Dreipole ausgestaltet sind und jeweils über zwei Gleichspannungsanschlussklemmen und eine Wechselspannungsanschlussklemme verfügen, so dass die Wechselspannungsanschlussklemmen einen Wechselspannungsanschluss des jeweiligen Teilumrichters ausbilden. Die Gleichspannungsklemmen der parallelen Phasenmodule eines Teilumrichters sind miteinander verbunden, so dass eine Brückenschaltung ausgebildet ist. Gemäß dieser vorteilhaften Ausgestaltung sind sowohl die Phasenmodule der Pluspol-Teilumrichter als auch die Phasenmodule der Minuspol-Teilumrichter jeweils als Dreipole ausgebildet. Zweckmäßigerweise sind die Phasenmodule eines Teilumrichters identisch.

Gemäß einer diesbezüglich zweckmäßigen Weiterentwicklung sind alle Teilumrichter im Wesentlichen gleich ausgebildet. Sie weisen mit anderen Worten die gleiche Topologie auf.

Gemäß einer diesbezüglich zweckmäßigen Weiterentwicklung verfügen die Pluspol-Leistungsaustauschmittel und die Minuspol-Leistungsaustauschmittel jeweils über einen Transformator, der jeweils zwei Wechselspannungsanschlüsse unterschiedlicher Teilumrichter miteinander verbindet. Gemäß dieser vorteilhaften Weiterentwicklung koppelt ein Pluspol-Transformator die Wechselspannungsanschlüsse der Pluspol-Teilumrichter induktiv miteinander, so dass der Leistungsaustausch zwischen den beiden Pluspol-Teilumrichtern wechselspannungsseitig über den Pluspol-Transformator erfolgt. Entsprechend ist ein Minuspol-Transformator vorgesehen, der die Wechselspannungsanschlüsse der Minuspol-Teilumrichter induktiv miteinander koppelt. Auf diese Art und Weise fließt die zwischen den Plus- beziehungsweise Minuspol-Teilumrichtern ausgetauschte Leistung über den Pluspol-Transformator beziehungsweise über den Minuspol-Transformator.

Erfindungsgemäß verfügt jedes Phasenmodul über eine Reihenschaltung von zweipoligen Submodulen. Die Submodule weisen beispielsweise einen einfachen Leistungshalbleiterschalter in Gestalt eines IGBTs, IGCTs, GTOs oder dergleichen auf, dem eine Freilaufdiode gegensinnig parallel geschaltet ist. Abweichend hiervon ist jedes Submodul ein rückwärts leitfähiger Leistungshalbleiterschalter. Anders ausgedrückt besteht jedes Submodul ausschließlich aus einem rückwärts leitfähigen Leistungshalbleiterschalter. Die Anzahl der in Reihe geschalteten Submodule ist dabei an die jeweils aufzunehmenden Spannungen, die am ersten und zweiten Gleichspannungsanschluss abfallen, angepasst.

Vorteilhafterweise ist jedes Submodul erfindungsgemäß mit einem Energiespeicher und einer Leistungshalbleiterschaltung ausgerüstet, wobei eine Halb- oder Vollbrückenschaltung ausgebildet ist. Darüber hinaus können alle oder einige Submodule eines Phasenmoduls als Doppelmodul ausgebildet sein. Die Leistungshalbleiterschaltung umfasst mehrere miteinander verschaltete Leistungshalbleiterschalter. Bei Bedarf umfasst die Leistungshalbleiterschaltung auch Freilauf- und/oder Klemmdioden. Ein solcher Teilumrichter wird auch als modularer Mehrstufenumrichter bezeichnet, wobei die Leistungshalbleiterschaltung als Teil einer Halbbrückenschaltung eine Reihenschaltung aus zwei Leistungshalbleiterschaltern ist, denen jeweils eine Freilaufdiode gegensinnig parallel geschaltet ist. Alternativ kann statt eines Leistungshalbleiterschalters mit gegensinniger Freilaufdiode auch ein rückwärts leitfähiger Leistungshalbleiterschalter im Rahmen der Erfindung eingesetzt werden. Bei einer Halbbrückenschaltung ist eine Anschlussklemme des zweipoligen Submoduls an dem Potenzialpunkt zwischen den Leistungshalbleiterschaltern der Reihenschaltung angeschlossen, wobei die andere Anschlussklemme des Submoduls niederinduktiv mit einem Pol des Energiespeichers verbunden ist.

Bei einer Vollbrückenschaltung sind zwei Reihenschaltungen aus jeweils zwei Leistungshalbleiterschaltern mit jeweils gegensinniger Freilaufdiode dem Energiespeicher parallel geschaltet. Eine der Anschlussklemmen ist mit dem Potenzialpunkt zwischen den Leistungshalbleiterschaltern der ersten Reihenschaltung und die zweite Anschlussklemme des Submoduls mit dem Potenzialpunkt zwischen den Leistungshalbleiterschaltern der zweiten Reihenschaltung verbunden. Statt eines Leistungshalbleiterschalters können natürlich auch mehrere in Reihe geschaltete Leistungshalbleiterschalter eingesetzt werden, die gleichzeitig angesteuert werden. Die synchron angesteuerten Leistungshalbleiterschalter verhalten sich dann wie ein einzelner Leistungshalbleiterschalter.

Zweckmäßigerweise weist jeder Teilumrichter zwei Phasenmodule auf. Gemäß dieser vorteilhaften Weiterentwicklung sind die Teilumrichter besonders kostengünstig ausgestaltet.

Gemäß einer weiteren Variante der Erfindung koppeln die Zusatzleistungsaustauschmittel die Pluspol-Leistungsaustauschmittel und die Minuspol-Leistungsaustauschmittel induktiv miteinander. Hierbei ist zweckmäßig, dass die Pluspol-Leistungsaustauschmittel einen Pluspol-Transformator und die Minuspol-Leistungsaustauschmittel einen Minuspol-Transformator aufweisen. Die Zusatzleistungsaustauschmittel umfassen beispielsweise eine Tertiärwicklung, die in dem Pluspol-Transformator angeordnet ist und eine weitere Tertiärwicklung, die in dem Minuspol-Transformator angeordnet ist. Auf diese Art und Weise ist eine besonders einfache und damit kostengünstige Leistungskopplung im Rahmen der Erfindung bereitgestellt. Transformatoren mit drei Wicklungen, die auf einen gemeinsamen Transformatorkern gewickelt sind, sind aus dem Stand der Technik bestens bekannt, so dass auf deren genaue Ausgestaltung hier nicht genauer eingegangen zu werden braucht.

Abweichend hiervon ist es jedoch auch möglich, dass die Zusatzleistungsaustauschmittel den Wechselspannungsanschluss eines der Pluspol-Teilumrichter mit dem Wechselspannungsanschluss eines der Minuspol-Teilumrichter induktiv koppeln. Gemäß dieser vorteilhaften Ausgestaltung umfassen die Zusatzleistungsaustauschmittel beispielsweise einen Zusatztransformator, wobei eine der Wicklungen des Zusatztransformators mit dem Wechselspannungsnetzanschluss eines der Pluspol-Teilumrichter und die zweite Wicklung des Zusatztransformators mit einem Wechselspannungsanschluss der Minuspol-Teilumrichter verbunden ist.

Darüber hinaus kann es im Rahmen der Erfindung zweckmäßig sein, dass die Zusatzleistungsaustauschmittel mit einem Netzanschluss zum Anschluss eines Wechselspannungsversorgungsnetzes ausgerüstet sind. Dieser Netzanschluss ist beispielsweise eine Tertiärwicklung, die Teil eines Zusatztransformators ist. Umfassen die Zusatzleistungsaustauschmittel hingegen eine Tertiärwicklung eines Pluspol-Transformators und eine Tertiärwicklung eines Minuspol-Transformators, ist der Netzanschluss als Anschlussleitung realisiert, die galvanisch mit einer Verbindungsleitung verbunden ist, mit der die Tertiärwicklungen der Zusatzleistungsaustauschmittel verbunden sind.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: einen Gleichspannungswandler gemäß dem Stand der Technik,
- Figur 2: einen bereits angemeldeten, aber unveröffentlichten Gleichspannungswandler,
- Figur 3: ein erstes Ausführungsbeispiel des erfindungsgemäßen Gleichspannungswandlers,
- Figur 4: ein weiteres Ausführungsbeispiel des erfindungsgemäßen Gleichspannungswandlers,
- Figur 5: ein Phasenmodul eines Teilumrichters eines Gleichspannungswandlers gemäß einer der Figuren 3 oder 4,
- Figuren 6, 7 und 8: Ausführungsbeispiele von Submodulen eines Phasenmoduls gemäß Figur 5,
- Figur 9: den Gleichspannungswandler gemäß Figur 3 zur Verbindung eines möglicherweise asymmetrischen zweipoligen Hochspannungsgleichstromnetzes mit einem symmetrischen Hochspannungsgleichstromnetz und
- Figur 10: den Gleichspannungswandler gemäß Figur 3 zur Verbindung von zwei zweipoligen Hochspannungsgleichstromnetzen verdeutlichen.

Die Figuren 1 und 2 wurden bereits im Zusammenhang mit der Beschreibungseinleitung ausführlich beschrieben.

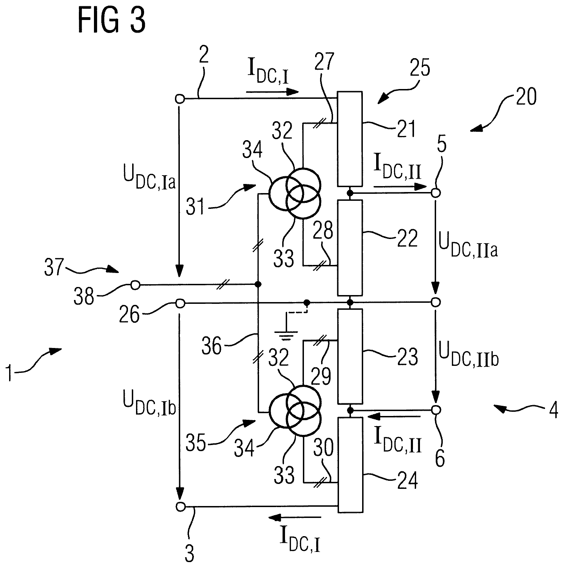

Figur 3 zeigt ein Ausführungsbeispiel des erfindungsgemäßen Gleichspannungswandlers 20, der aus einer Reihenschaltung von vier Teilumrichtern 21, 22, 23 und 24 besteht, so dass eine Umrichterreihenschaltung 25 bereitgestellt ist, die zwischen eine positive Anschlussklemme 2 und eine negative Anschlussklemme 3 eines ersten Gleichspannungsanschlusses 1 geschaltet ist. Darüber hinaus ist eine Mittenanschlussklemme 26 erkennbar, die mit dem Erdpotenzial verbunden ist. Die Teilumrichter 21 und 22 sind zwischen der positiven Anschlussklemme 2 des ersten Gleichspannungsanschlusses 1 und der Mittenanschlussklemme 26 angeordnet und werden im Folgenden als Pluspol-Teilumrichter 21 und 22 bezeichnet. Der Potenzialpunkt zwischen den Pluspol-Teilumrichtern 21 und 22 bildet eine positive Anschlussklemme 5 eines zweiten Gleichspannungsanschlusses 4 aus. Zwischen der Mittenanschlussklemme 26 und der negativen Anschlussklemme 3 des ersten Gleichspannungsanschlusses 1 sind die Teilumrichter 23 und 24 angeordnet, die im Folgenden als Minuspol-Teilumrichter 23 und 24 bezeichnet werden. Mit anderen Worten sind die Pluspol-Teilumrichter 21 und 22 zwischen der positiven Anschlussklemme 2 des ersten Gleichspannungsanschlusses 1 und die Mittenanschlussklemme 26 geschaltet, während die Minuspol-Teilumrichter 23 und 24 zwischen der Mittenanschlussklemme 26 und der negativen Anschlussklemme 3 des ersten Gleichspannungsanschlusses 1 angeordnet ist. Der Potenzialpunkt zwischen den Minuspol-Teilumrichtern 23 und 24 bildet die negative Anschlussklemme des zweiten Gleichspannungsanschlusses 4 aus.

Jeder der besagten Teilumrichter 21, 22, 23 und 24 weist zwei einander parallel geschaltete Phasenmodule auf, die jeweils als Dreipole ausgestaltet sind und neben zwei Gleichspannungsanschlussklemmen über eine Wechselspannungsanschlussklemme verfügen. Die Wechselspannungsanschlussklemmen der Phasenmodule eines Teilumrichters 21, 22, 23 oder 24 bilden gemeinsam einen Wechselspannungsanschluss 27, 28, 29 beziehungsweise 30 des jeweiligen Teilumrichters 21, 22, 23 oder 24 aus. Jede Gleichspannungsanschlussklemme eines Phasenmoduls ist mit einer der Gleichspannungsklemmen des parallelen Phasenmoduls verbunden.

Der Wechselspannungsanschluss 27 des ersten Pluspol- Teilumrichters 21 ist mit dem Wechselspannungsanschluss 29 des zweiten Pluspol-Teilumrichters 22 induktiv gekoppelt. Hierzu dient ein Pluspol-Transformator 31 als Pluspol-Leistungsaustauschmittel, der eine Primärwicklung 32 und eine Sekundärwicklung 22 aufweist. Die Primärwicklung 32 ist mit dem Wechselspannungsanschluss 27 des ersten Pluspol-Teilumrichters 21 und die Sekundärwicklung 33 mit dem Wechselspannungsanschluss 29 des zweiten Pluspol-Teilumrichters 22 galvanisch verbunden. Der Pluspol-Transformator 31 verfügt ferner über eine Tertiärwicklung 34, auf die später noch genauer eingegangen werden wird.

Auf der Minuspolseite des Gleichspannungswandlers 20 ist ein Minuspol-Transformator 35 als Minuspol-Leistungsaustauschmittel erkennbar, der auf die gleiche Weise den Wechselspannungsanschluss 29 des ersten Minuspol-Teilumrichters 23 induktiv mit dem Wechselspannungsanschluss 30 des zweiten Minuspol-Teilumrichters 24 induktiv koppelt.

Mit Hilfe der Pluspol-Leistungsaustauschmittel 31 beziehungsweise der Minuspol-Leistungsaustauschmittel 35 ist ein Leistungsaustausch unter den Pluspol- beziehungsweise Minuspol-Teilumrichtern ermöglicht. Der Leistungsfluss ist durch die Ansteuerung der Leistungshalbleiterschalter der jeweiligen Teilumrichter 21, 22, 23 und 24 einstellbar. Hierzu dient eine zweckmäßige Steuerung, die von der jeweiligen Topologie der Teilumrichter 21, 22, 23 und 24 abhängig ist. Mit Hilfe der Steuerung können die Wechselspannungen und -ströme an den Wechselspannungsanschlüssen der Teilumrichter eingestellt werden. Solche Steuerungs- oder Regelungseinheiten sind jedoch dem Fachmann jedoch bekannt, so dass an dieser Stelle hierauf nicht genauer eingegangen zu werden braucht.

Wie der Pluspol-Transformator 31 verfügt auch der Minuspol-Transformator 35 neben den induktiv miteinander gekoppelten Wicklungen 32 und 33 über eine Tertiärwicklung 34, die mit der Tertiärwicklung 34 des Pluspol-Transformators 31 mittels einer Verbindungsleitung 36 galvanisch verbunden ist. Dabei bilden die Tertiärwicklungen 34 des Pluspol-Transformators 31 und des Minuspol-Transformators 35 zusammen mit ihrer zweiphasigen Verbindungsleitung 36 so genannte Zusatzleistungsaustauschmittel 37 aus, über die ein Leistungsaustausch zwischen den Pluspol-Leistungsaustauschmitteln 31 und den Minuspol-Leistungsaustauschmitteln 35 ermöglicht ist. Aufgrund dieser zusätzlichen Leistungskopplung ist es möglich, den Gleichspannungswandler 20 zur Verbindung von Hochspannungsgleichstromnetzen einzusetzen, die nicht nur unterschiedliche Nennspannungen, sondern eine unterschiedliche Übertragungstopologie aufweisen. Auf diese Eigenschaft wird später noch detaillierter eingegangen.

Wie bereits ausgeführt wurde, bilden die Tertiärwicklungen 34 sowie deren Verbindungsleitung 36 Zusatzleistungsaustauschmittel 37 an. Die Zusatzleistungsaustauschmittel 37 verfügen in dem in Figur 3 gezeigten Ausführungsbeispiel über einen Netzanschluss 38, der als Anschluss für ein Versorgungsnetz eingesetzt werden kann. Der Netzanschluss 38 ist hier eine zweiphasige Anschlussleitung, die mit der jeweiligen Phase der Verbindungsleitung 36 verbunden ist.

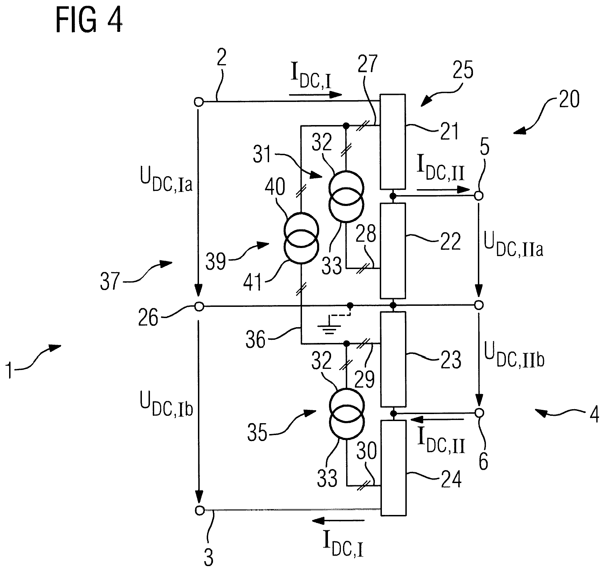

Figur 4 zeigt ein weiteres Ausführungsbeispiel des erfindungsgemäßen Gleichspannungswandlers, der sich von dem in Figur 3 gezeigten Ausführungsbeispiel lediglich durch die Ausgestaltung der Zusatzleistungsaustauschmittel 37 unterscheidet. So weist der in Figur 4 gezeigte Gleichspannungswandler 20 statt Tertiärwicklungen einen Zusatztransformator 39 auf, der über eine Primärwicklung 40 sowie eine Sekundärwicklung 41 verfügt, die induktiv miteinander gekoppelt sind. Dabei ist die Primärwicklung 40 mit dem Wechselspannungsanschluss 27 des ersten Pluspol-Teilumrichters 21 verbunden. Die Sekundärwicklung 41 des Zusatztransformators 39 ist hingegen an den Wechselspannungsanschluss 29 des ersten Minuspol-Teilumrichters 23 angeschlossen. Über den Zusatztransformator 39 ist der Leistungsaustausch zwischen einem der Pluspol-Teilumrichter 21 und einem der Minuspol-Teilumrichter 23 ermöglicht. Da die Pluspol-Teilumrichter 21 und 22 sowie die Minuspol-Teilumrichter 23 und 24 über die Pluspol-Leistungsaustauschmittel beziehungsweise Minuspol-Leistungsaustauschmittel miteinander gekoppelt sind, ist auch bei dem in Figur 4 gezeigten Ausführungsbeispiel ein beliebiger Leistungsfluss zwischen den Teilumrichtern 21, 22, 23 und 24 und somit auch die Verbindung unterschiedlicher Hochspannungsgleichstromnetze ermöglicht.

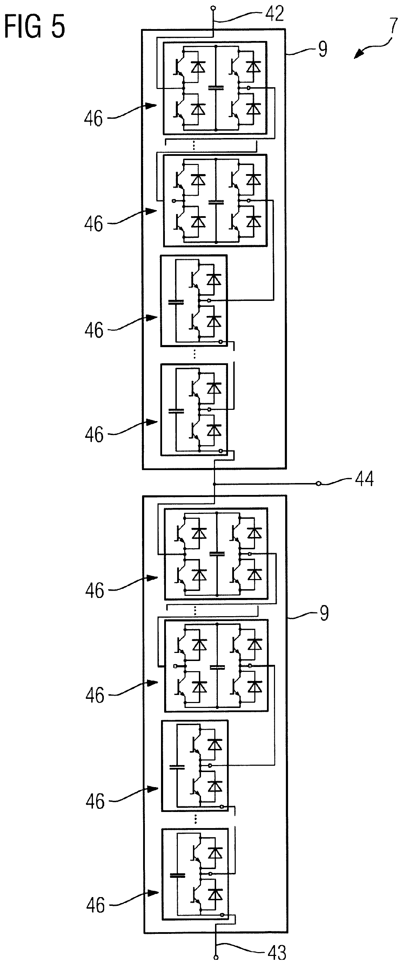

Figur 5 zeigt ein Ausführungsbeispiel eines Phasenmoduls einer der Teilumrichter 22, 23, 24 beziehungsweise 25. Es ist erkennbar, dass jedes Phasenmodul 7 eine erste Gleichspannungsanschlussklemme 42 sowie eine zweite Gleichspannungsanschlussklemme 43 aufweist. Darüber hinaus ist eine Wechselspannungsanschlussklemme 44 erkennbar, wobei sich zwischen jeder Gleichspannungsanschlussklemme 42 beziehungsweise 43 und der Wechselspannungsanschlussklemme 44 jeweils ein Umrichterarm 9 erstreckt. Mit anderen Worten verfügt jedes Phasenmodul 7 über zwei in Reihe miteinander verbundene Umrichterarme 9, wobei der Potenzialpunkt zwischen den Umrichterarmen 9 die Wechselspannungsanschlussklemme 44 ausbildet. An dieser Stelle sei angemerkt, dass jedes Phasenmodul 7 darüber hinaus auch noch Induktivitäten zur Begrenzung eines über die Phasenmodule 7 fließenden Kreisstromes aufweisen kann.

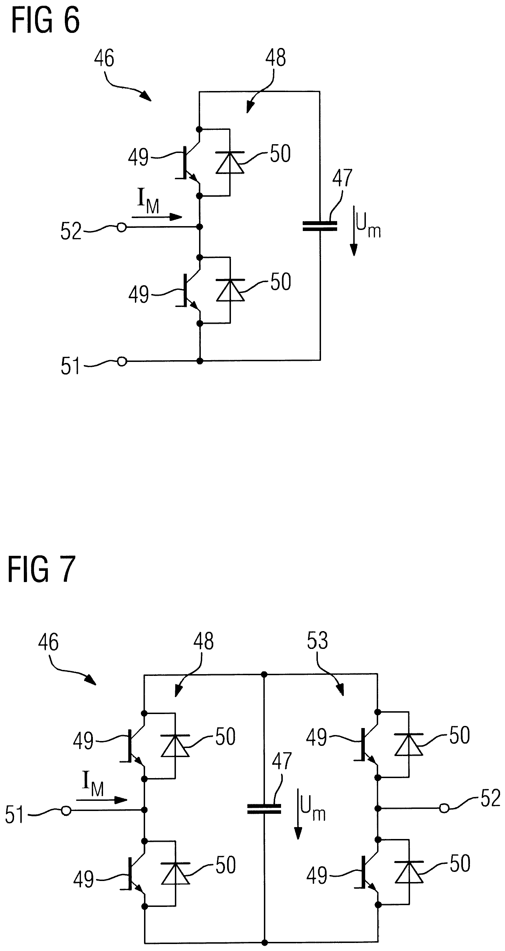

Aus Figur 5 ist ebenfalls erkennbar, dass die Umrichterarme 9 und somit die Phasenmodule 7 jeweils eine Reihenschaltung aus zweipoligen Submodulen 46 aufweisen, die in dem in Figur 5 gezeigten Ausführungsbeispiel unterschiedlich zueinander ausgestaltet sind. Beispiele solcher Submodule 46 sind in den Figuren 6, 7 und 8 dargestellt. Im Rahmen der Erfindung können die Phasenmodule 7 aus identischen Submodulen, aber auch aus unterschiedlichen Submodulen, wie in Figur 5 angedeutet, bestehen.

Bei dem in Figur 6 verdeutlichten Submodul 46 handelt es sich um eine so genannte Halbbrückenschaltung. Es ist erkennbar, dass dieses Submodul 46 einen Energiespeicher 47 in Gestalt eines unipolaren Kondensators 47 aufweist. Dem Kondensator 47 ist eine Reihenschaltung 48 aus zwei Leistungshalbleiterschaltern 49, hier IGBTs, parallel geschaltet, wobei jedem IGBT 49 wiederum eine Freilaufdiode 50 gegensinnig parallel geschaltet ist. Eine erste Submodulanschlussklemme 51 des Submoduls 46 ist mit einem Pol des Kondensators 47 verbunden, wohingegen eine zweite Submodulanschlussklemme 52 mit dem Potentialpunkt zwischen den IGBTs 49 verbunden ist. Je nach Ansteuerung der Leistungshalbleiterschalter 49 kann somit die an dem Kondensator 47 abfallende Spannung Uₘ oder aber eine Nullspannung erzeugt werden.

Figur 7 zeigt ein weiteres Ausführungsbeispiel eines Submoduls 46, das ebenfalls einen Energiespeicher 47 in Gestalt eines Kondensators aufweist, an dem eine unipolare Spannung Uₘ abfällt. Auch hier ist eine erste Reihenschaltung 48 von zwei IGBTs 49 vorgesehen, wobei jedem IGBT 49 wieder eine Freilaufdiode 50 gegensinnig parallel geschaltet ist. Darüber hinaus ist jedoch auch eine zweite Reihenschaltung 53 vorgesehen, die dem Kondensator 47 ebenfalls parallel geschaltet ist. Auch die zweite Reihenschaltung 53 weist zwei in Reihe geschaltete IGBTs 49 auf, denen jeweils eine Freilaufdiode 50 gegensinnig parallel geschaltet ist. Die erste Submodulanschlussklemme 51 ist mit dem Potentialpunkt zwischen den IGBTs 49 der ersten Reihenschaltung 46 verbunden, wobei der Potentialpunkt zwischen den IGBTs 47 der zweiten Reihenschaltung 50 die zweite Anschlussklemme 52 ausbildet. Mit einer Vollbrückenschaltung kann an den beiden Anschlussklemmen 51 und 52 einmal die an die dem Energiespeicher 47 abfallende Spannung Uₘ eine Nullspannung oder aber die inverse Kondensatorspannung -Uₘ erzeugt werden.

Darüber hinaus kann mit der Vollbrückenschaltung 46 gemäß Figur 7 der Stromfluss zwischen den Anschlussklemmen 51 und 52 in beiden Richtungen gezielt gesteuert werden. Anders ausgedrückt kann bei einem Kurzschluss in beiden Richtungen mit Hilfe eines Vollbrückenmoduls 46 ein Gegenpotential aufgebaut werden, das zur Unterdrückung des Kurzschlussstromes einsetzbar ist. Bei einem Submodul 46 gemäß Figur 6, das also als Halbbrückenschaltung realisiert ist, kann bei entsprechender Polarität ein Strom von der Submodulanschlussklemme 51 über die untere Freilaufdiode 50 in die Submodulanschlussklemme 52 fließen, ohne dass dieser aktiv unterbrochen werden kann. Ein Kurzschlussstrom in dieser Richtung kann daher nicht beeinflusst werden. Demgegenüber weist die Halbbrückenschaltung jedoch den Vorteil auf, dass diese lediglich zwei IGBTs und zwei Freilaufdioden für ihren Aufbau benötigt und somit wesentlich kostengünstiger herstellbar sind als die Vollbrückenschaltung gemäß Figur 7. Darüber hinaus sind die Verluste der Halbbrückenschaltung geringer.

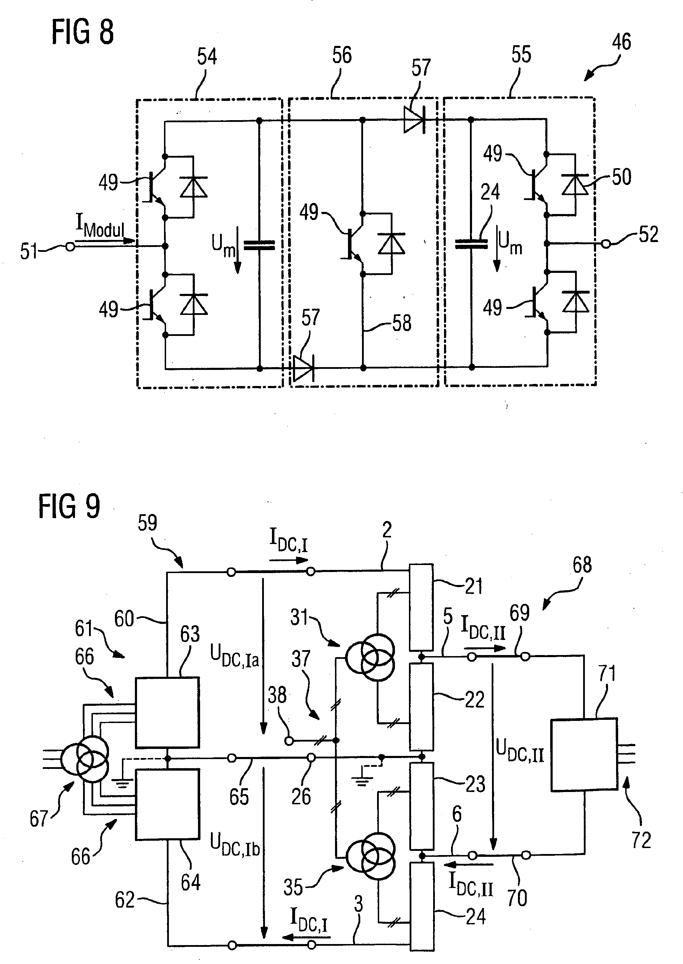

Ein Kompromiss zwischen beiden Ausgestaltungen, also der Halb- und der Vollbrückenschaltung, stellt das in Figur 8 gezeigte Submodul 46 dar, das auch als so genannte Doppelmodulschaltung bekannt ist. Die Doppelmodulschaltung 46 ist detailliert in der WO 2011/067120 beschrieben und besteht aus zwei identischen Untereinheiten 54 und 55, deren Topologie an diejenige einer Halbbrückenschaltung angelehnt ist. Die Untereinheiten 54 und 55 umfassen jeweils einen Energiespeicher 47 in Gestalt eines Kondensators sowie eine Reihenschaltung 48 aus zwei IGBTs 49 mit jeweils antiparalleler Freilaufdiode 50. Alternativ kommen rückwärts leitende Leistungshalbleiter in Betracht. Eine erste Submodulanschlussklemme 51 ist mit dem Potentialpunkt zwischen den IGBTs 49 der ersten Untereinheit 54 verbunden, wohingegen die zweite Submodulanschlussklemme 52 mit dem Potentialpunkt zwischen den IGBTs 49 der zweiten Untereinheit 55 verbunden ist. Die beiden Untereinheiten 54 und 55 sind über Verbindungsmittel 56 miteinander verbunden, wobei die Verbindungsmittel 56 Potentialtrennungsdioden 57 sowie einen weiteren IGBT 49 in einem Mittelzweig 58 aufweisen, welcher die Kathode der unteren Potentialtrennungsdiode 57 mit der Anode der oberen Potentialtrennungsdiode 57 verbindet. Dieses Submodul 46 kann an seinem Submodulanschlussklemmen 51, 52 die gleichen Spannungen erzeugen, wie zwei in Reihe geschaltete Halbbrückenschaltungen 46 gemäß Figur 6, wobei jedoch die Verbindungsmittel 56 dafür sorgen, dass zu Kurzschlussströmen in beiden Richtungen ein Gegenpotential aufgebaut werden kann. Somit können Kurzschlussströme, die in beiden Richtungen über die Anschlussklemmen 51 und 52 fließen wollen, gezielt herabgesetzt oder sogar unterdrückt werden.

Wieder mit Bezug auf Figur 5 kann somit je nach Ansteuerung der Submodule 46 die zwischen dem jeweiligen Gleichspannungsanschluss 42, 43 und dem jeweiligen Wechselspannungsanschluss 44 abfallende Spannung stufenweise variiert werden. Somit ist am Wechselspannungsanschluss 44 eines jeden Teilumrichters 21, 22, 23, 24 eine Wechselspannung einstellbar.

Figur 9 zeigt den Gleichspannungswandler gemäß Figur 3, wobei der erste Gleichspannungsanschluss 1 mit einem zweipoligen Hochspannungsgleichstromnetz 59 verbunden ist. Das Hochspannungsgleichstromnetz 59 verfügt über eine positive Polleitung 60, die mit einer Klemme des Gleichspannungsanschlusses eines Zwölfpuls-Umrichters 61 verbunden ist. Die zweite Klemme des Gleichspannungsanschlusses des Zwölfpuls-Umrichters 61 ist mit einer negativen Polleitung 62 verbunden, die wiederum mit der negativen Anschlussklemme 3 des ersten Gleichspannungsanschlusses 1 des Gleichspannungswandlers 20 verbunden ist.

Der Zwölfpuls-Umrichter 61 verfügt in an sich bekannter Weise über zwei in Reihe zueinander geschaltete Sechspuls-Umrichter 63 und 64, wobei der Verbindungspunkt zwischen den Sechspuls-Umrichtern 63 und 64 mit dem Erdpotenzial verbunden ist. Dieser Erdanschluss ist über eine Erdverbindungsleitung 64 mit der Mittenanschlussklemme 20 des Gleichspannungswandlers 20 verbunden. Jeder der Sechspuls-Umrichter 63 und 64 verfügt ferner über einen Wechselspannungsanschluss 65, der mit einer Wicklung eines dreiwickligen Transformators 66 verbunden ist. Der Transformator 66 ist über seine Primärwicklung mit einem nicht näher dargestellten Wechselspannungsnetz verbunden. Durch die unterschiedliche Verschaltung (Dreieck, Stern) der verbleibenden Wicklungen des Transformators ist ein Phasenversatz bereitgestellt, so dass die gewünschte Zwölfpuls-Schaltung ermöglicht ist. Das zweipolige Hochspannungsgleichstromnetz hat den Vorteil, dass die Leistungsübertragung auch bei Ausfall eines Pols, also beispielsweise bei Ausfall des Umrichters 65 fortgesetzt werden kann, wobei die Erdverbindungsleitung 65 an die Stelle der Polleitung 62 tritt. Die Polleitungen 60 und 62 können daher unterschiedlich stark belastet werden, wobei Ausgleichsströme über die Erdverbindungsleitung 65 fließen.

Der zweite Gleichspannungsanschluss 4 des Gleichspannungswandlers 20 ist hingegen mit einem so genannten symmetrischen Hochspannungsgleichstromnetz verbunden, also mit einem zweiten Hochspannungsgleichstromnetz 68, das eine positive Gleichspannungspolleitung 69 und eine negative Gleichspannungspolleitung 70 aufweist. Die beiden Gleichspannungspolleitungen 68 und 69 sind jeweils an den Gleichspannungsanschluss eines einpoligen Umrichters 71 angeschlossen, der beispielsweise aus drei Phasenmodulen 7 gemäß Figur 5 besteht, die zu einer Graetz-Brücke verschaltet sind. Der Umrichter 71 verfügt daher über einen Wechselspannungsanschluss 72, an den beispielsweise ein Wechselspannungsnetz eines Windparks angeschlossen ist. Die Gleichspannungspolleitungen 69 und 70 sind hier immer gleich stark belastet. Die Leistungsübertragung erfolgt symmetrisch. Mit Hilfe des Gleichspannungswandlers 20 kann auch bei Ausfall eines Pols ein Leistungsfluss zwischen den Umrichtern 61 und 71 aufrecht erhalten werden.

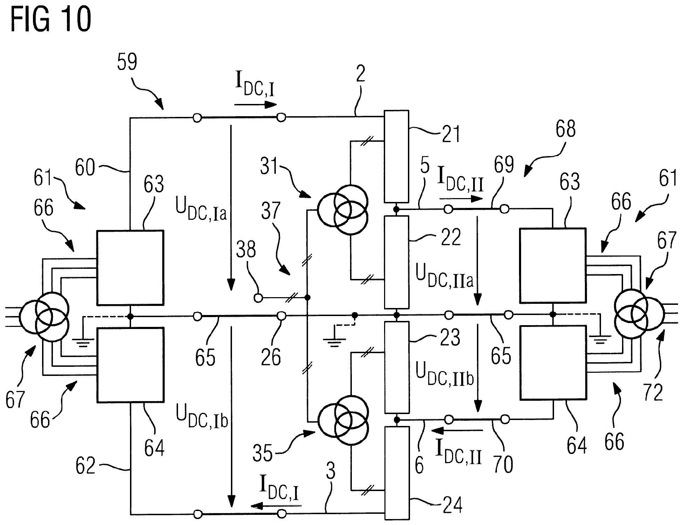

Figur 10 zeigt den Einsatz des Gleichspannungswandlers 20 zur Verbindung von zwei zweipoligen Umrichtern 61. Hierbei sind beide Erdanschlussleitungen 65 mit der geerdeten Mittenanschlussklemme 26 des Gleichspannungswandlers verbunden.

## Patentansprüche

1. Gleichspannungswandler (20) zum Verbinden von unterschiedliche Spannungen aufweisenden Hochspannungsgleichstromnetzen (59,67) mit
- einer aus in Reihe geschalteten Teilumrichtern (21,22,23,24) gebildeten Umrichterreihenschaltung (25), die zwischen einer positiven (2) und einer negativen (3) Anschlussklemme eines ersten Gleichspannungsanschlusses (1) angeordnet ist,
- wobei wenigstens zwei Teilumrichter der Umrichterreihenschaltung als Pluspol-Teilumrichter (21,22) zwischen einer Mittenanschlussklemme (26) und der positiven Anschlussklemme (2) des ersten Gleichspannungsanschlusses (1) in Reihe angeordnet sind und
- die Pluspol-Teilumrichter (21,22) über Pluspol-Leistungsaustauschmittel (31) miteinander verbunden sind, so dass der Austausch von elektrischer Leistung unter den Pluspol-Teilumrichtern (21,22) ermöglicht ist,
- wobei der Potenzialpunkt zwischen den Pluspol-Teilumrichtern (21,22) eine positive Anschlussklemme (5) eines zweiten Gleichspannungsanschlusses (4) ausbildet,
- wobei wenigstens zwei Teilumrichter der Umrichterreihenschaltung als Minuspol-Teilumrichter (23,24) zwischen der Mittenanschlussklemme (26) und der negativen Anschlussklemme (3) des ersten Gleichspannungsanschlusses (1) in Reihe angeordnet sind und
- die Minuspol-Teilumrichter (23,24) über Minuspol-Leistungsaustauschmittel (35) miteinander verbunden sind, so dass der Austausch von elektrischer Leistung zwischen den Minuspol-Teilumrichtern (23,24) ermöglicht ist,
- wobei der Potenzialpunkt zwischen den Minuspol-Teilumrichtern (23,24) eine negative Anschlussklemme (6) des zweiten Gleichspannungsanschlusses (4) ausbildet,
- wobei Zusatzleistungsaustauschmittel (37) vorgesehen sind, die so mit den Pluspol-Teilumrichtern (21,22) und den Minuspol-Teilumrichtern (23,24) verbunden sind, dass ein Leistungsaustausch zwischen den Pluspol-Teilumrichtern (21, 22) und den Minuspol-Teilumrichtern (23,24) über die Zusatzleistungsaustauschmittel (37) ermöglicht ist, und
- die Pluspol-Leistungsaustauschmittel einen Pluspol-Transformator (31) und die Minuspol-Leistungsaustauschmittel einen Minuspol-Transformator (35) aufweisen,
**dadurch gekennzeichnet, dass**
- die Zusatzleistungsaustauschmittel (37) eine Tertiärwicklung (34) in dem Minuspol-Transformator (35) und eine Tertiärwicklung in dem Pluspol-Transformator (31) aufweisen und die Tertiärwicklung (34) des Pluspol-Transformators (31) mit der Tertiärwicklung (34) des Minuspol-Transformators (35) galvanisch verbunden ist,
- jeder Teilumrichter (21,22,23,24) wenigstens zwei Phasenmodule (17) aufweist, wobei jedes Phasenmodul (7) eine Reihenschaltung von zweipoligen Submodulen (46) aufweist, und
- jedes Submodul (46) einen Energiespeicher (47) sowie eine Leistungshalbleiterschaltung aufweist, wobei eine Halb- oder Vollbrückenschaltung oder ein Doppelmodul ausgebildet ist.

2. Gleichspannungswandler (20) nach Anspruch 1,
**dadurch gekennzeichnet, dass**
die Phasenmodule (17) jeweils als Dreipole ausgestaltet sind und jeweils über zwei Gleichspannungsanschlussklemmen (42,43) und eine Wechselspannungsanschlussklemme (44) verfügen, so dass die Wechselspannungsanschlussklemmen (44) einen Wechselspannungsanschluss (27,28,29,30) des jeweiligen Teilumrichters (21,22,23,24) ausbilden.

3. Gleichspannungswandler (20) nach Anspruch 2,
**dadurch gekennzeichnet, dass**
die Pluspol-Leistungsaustauschmittel (31) und die Minuspol-Leistungsaustauschmittel (35) jeweils einen Transformator aufweisen, der jeweils Wechselspannungsanschlüsse (27,28,29,30) unterschiedlicher Teilumrichter (21,22,23,24) miteinander verbindet.

4. Gleichspannungswandler (20) nach einem der Ansprüche 2 bis 3,
**dadurch gekennzeichnet, dass**
jeder Teilumrichter (21,22,23,24) zwei Phasenmodule (7) aufweist.

5. Gleichspannungswandler (20) nach einem der vorhergehenden Ansprüche,
**dadurch gekennzeichnet, dass**
die Zusatzleistungsaustauschmittel (37) die Pluspol-Leistungsaustauschmittel (31) und die Minuspol-Leistungsaustauschmittel (35) induktiv miteinander koppeln.

6. Gleichspannungswandler (20) nach einem der Ansprüche 1 bis 4,
**dadurch gekennzeichnet, dass**
die Zusatzleistungsaustauschmittel (37) den Wechselspannungsanschluss (27,28) eines der Pluspol-Teilumrichter (21,22) mit dem Wechselspannungsanschluss (29,30) eines der Minuspol-Teilumrichter (23,24) induktiv miteinander koppelt.

7. Gleichspannungswandler (20) nach einem der vorhergehenden Ansprüche,
**dadurch gekennzeichnet, dass**
die Zusatzleistungsaustauschmittel (37) mit einem Netzanschluss (38) zum Anschluss eines Wechselspannungsversorgungsnetzes ausgerüstet sind.

## Claims

1. DC converter (20) for connecting high-voltage DC networks (59, 67) with different voltages, with
- a converter series circuit (25) formed of sub-converters (21, 22, 23, 24) connected in series that is arranged between a positive (2) and a negative (3) connection terminal of a first DC connection (1),
- wherein at least two sub-converters of the converter series circuit are arranged as positive pole sub-converters (21, 22) in series between a central connection terminal (26) and the positive connection terminal (2) of the first DC connection (1) and
- the positive pole sub-converters (21, 22) are connected together through positive pole power exchanging means (31), so that the exchange of electrical power between the positive pole sub-converters (21, 22) is enabled,
- wherein the potential node between the positive pole sub-converters (21, 22) forms a positive connection terminal (5) of a second DC connection (4),
- wherein at least two sub-converters of the converter series circuit are arranged as negative pole sub-converters (23, 24) in series between the central connection terminal (26) and the negative connection terminal (3) of the first DC connection (1) and
- the negative pole sub-converters (23, 24) are connected together through negative pole power exchanging means (35), so that the exchange of electrical power between the negative pole sub-converters (23, 24) is enabled,
- wherein the potential node between the negative pole sub-converters (23, 24) forms a negative connection terminal (6) of the second DC connection (4),
- wherein additional power exchanging means (37) are provided that are connected to the positive pole sub-converters (21, 22) and the negative pole sub-converters (23, 24) in such a way that an exchange of power between the positive pole sub-converters (21, 22) and the negative pole sub-converters (23, 24) through the additional power exchanging means (37) is enabled, and
- the positive pole power exchanging means comprise a positive pole transformer (31) and the negative pole power exchanging means comprise a negative pole transformer (35),
**characterized in that**
- the additional power exchanging means (37) comprise a tertiary winding (34) in the negative pole transformer (35) and a tertiary winding in the positive pole transformer (31) and the tertiary winding (34) of the positive pole transformer (31) is galvanically connected to the tertiary winding (34) of the negative pole transformer (35),
- each sub-converter (21, 22, 23, 24) comprises at least two phase modules (17), wherein each phase module (7) comprises a series circuit of two-pole sub-modules (46), and
- each sub-module (46) comprises an energy store (47) and a power semiconductor circuit, wherein a half-bridge or full-bridge circuit, or a double module, is formed.

2. DC converter (20) according to Claim 1,
**characterized in that**
each of the phase modules (17) has a three-pole implementation, and each of them has two DC connection terminals (42, 43) and one AC connection terminal (44), so that the AC connection terminals (44) provide an AC connection (27, 28, 29, 30) of the respective sub-converter (21, 22, 23, 24) .

3. DC converter (20) according to Claim 2,
**characterized in that**
the positive pole power exchanging means (31) and the negative pole power exchanging means (35) each have a transformer that connects together the respective AC connections (27, 28, 29, 30) of different sub-converters (21, 22, 23, 24).

4. DC converter (20) according to one of Claims 2 to 3,
**characterized in that**
each sub-converter (21, 22, 23, 24) comprises two phase modules (7).

5. DC converter (20) according to one of the previous claims,
**characterized in that**
the additional power exchanging means (37) couple the positive pole power exchanging means (31) and the negative pole power exchanging means (35) together inductively.

6. DC converter (20) according to one of Claims 1 to 4,
**characterized in that**
the additional power exchanging means (37) couples the AC connection (27, 28) of one of the positive pole sub-converters (21, 22) to the AC connection (29, 30) of one of the negative pole sub-converters (23, 24) together inductively.

7. DC converter (20) according to one of the previous claims,
**characterized in that**
the additional power exchanging means (37) are fitted with a network connection (38) for the connection of an AC power supply network.

## Revendications

1. Transformateur (20) de tension continue pour relier des réseaux (59, 67) de courant continu de haute tension ayant des tensions différentes, comprenant
- un circuit (25) série de convertisseurs, qui est formé de convertisseurs (21, 22, 23, 24) montés en série et qui est monté entre une borne de connexion positive (2) et une borne de connexion négative (3) d'une première connexion (1) de tension continue,
- dans lequel au moins deux convertisseurs partiels du circuit série de convertisseurs sont montés en convertisseurs (21, 22) partiels de pôle plus, entre une borne (26) de connexion médiane et la borne (2) de connexion positive de la première connexion (1 ) de tension continue et
- les convertisseurs (21, 22) partiels de pôle plus sont connectés entre eux par des moyens (31) d'échange de puissance de pôle plus, de manière à rendre possible l'échange de puissance électrique entre les convertisseurs (21, 22) partiels de pôle plus,
- dans lequel le point de potentiel entre les convertisseurs (21, 22) partiels de pôle plus constitue une borne (5) de connexion positive d'une deuxième connexion (4) de tension continue,
- dans lequel au moins deux convertisseurs partiels du circuit série de convertisseurs sont montés en série entre la borne (26) de connexion médiane et la borne (3) de connexion négative de la première connexion (1) de tension continue et
- les convertisseurs (23, 24) partiels de pôle moins sont connectés entre eux par des moyens (35) d'échange de puissance de pôle moins, de manière à rendre possible l'échange de puissance électrique entre les convertisseurs (23, 24) partiels de pôle moins,
- dans lequel le point de potentiel entre les convertisseurs (23, 24) partiels de pôle moins constitue une borne (6) de connexion négative de la deuxième connexion (4) de tension continue,
- dans lequel il est prévu des moyens (37) supplémentaires d'échange de puissance, qui sont connectés aux convertisseurs (21, 22) partiels de pôle plus et aux convertisseurs (23, 24) partiels de pôle moins, de manière à rendre possible un échange de puissance entre les convertisseurs (21, 22) partiels de pôle plus et les convertisseurs (23, 24) partiels de pôle moins par les moyens (37) supplémentaires d'échange de puissance et
- les moyens d'échange de puissance de pôle plus ont un transformateur (31) de pôle plus et les moyens d'échange de puissance de pôle moins un transformateur (35) de pôle moins,
**caractérisé en ce que**
- les moyens (37) supplémentaires d'échange de puissance ont un enroulement (34) tertiaire dans le transformateur (35 ) de pôle moins et un enroulement tertiaire dans le transformateur (31) de pôle plus et l'enroulement (34) tertiaire du transformateur (31) de pôle plus est relié galvaniquement à l'enroulement (34) tertiaire du transformateur (35) de pôle moins,
- chaque convertisseur (21, 22, 23, 24) partiel a au moins deux modules (17) de phase, chaque module (7) de phase ayant un circuit série de deux sous-modules (46) bipolaires, et
- chaque sous-module (46) a un accumulateur (47) d'énergie, ainsi qu'un circuit à semi-conducteur de puissance, un circuit en demi pont ou en pont complet ou un module double étant constitué.

2. Transformateur (20) de tension continue suivant la revendication 1,
**caractérisé en ce que**
les modules (17) de phase sont constitués chacun en trois pôles et disposent chacun de deux bornes (42, 43) de connexion de tension continue et d'une borne (44) de connexion de tension alternative, de manière à ce que les bornes (44) de connexion de tension alternative constituent une connexion (27, 28, 29, 30) de tension alternative du convertisseur (21, 22, 23, 24) partiel respectif.

3. Transformateur (20) de tension continue suivant la revendication 2,
**caractérisé en ce que**
les moyens (31) d'échange de puissance de pôle plus et les moyens (35) d'échange de puissance de pôle moins ont chacun un transformateur, qui connecte entre elles, respectivement, des connexions (27, 28, 29, 30) de tension alternative de convertisseurs (21, 22, 23, 24) partiels différents.

4. Transformateur (20) de tension continue suivant l'une des revendications 2 à 3,
**caractérisé en ce que**
chaque convertisseur (21, 22, 23, 24) partiel a deux modules (7) de phase.

5. Transformateur (20) de tension continue suivant l'une des revendications précédentes,
**caractérisé en ce que**
les moyens (37) supplémentaires d'échange de puissance couplent entre eux par induction les moyens (31) d'échange de puissance de pôle plus et les moyens (35) d'échange de puissance de pôle moins.

6. Transformateur (20) de tension continue suivant l'une des revendications 1 à 4,
**caractérisé en ce que**
les moyens (37) supplémentaires d'échange de puissance couplent entre elles par induction la connexion (27, 28) de tension alternative de l'un des convertisseurs (21, 22) partiels de pôle plus à la connexion (29, 30) de tension alternative de l'un des convertisseurs (23, 24 ) partiels de pôle moins.

7. Transformateur (20) de tension continue suivant l'une des revendications précédentes,
**caractérisé en ce que**
les moyens (37) supplémentaires d'échange de puissance sont équipés d'une connexion (38) au réseau pour la connexion d'un réseau d'alimentation en tension alternative.
